# EUROPEAN PATENT SPECIFICATION

(11) **EP 3 936 841 B1**
(45) Date of publication and mention of the grant of the patent: **05.06.2024**
(21) Application number: 20305786.4
(22) Date of filing: 08.07.2020
(51) Int. Cl.: G01J 3/28, G01J 3/02, H04N 1/195, G01J 3/14, G01J 3/18, G01J 3/04

(54) **SPECTRAL IMAGER AND PROCESS USING THE SAME**
SPEKTRALES BILDAUFNAHMEGERÄT UND VERFAHREN ZUR VERWENDUNG DAVON
IMAGEUR SPECTRAL ET PROCÉDÉ L'UTILISANT

(43) Date of publication of application: 12.01.2022
(73) Proprietor: Airbus Defence and Space SAS, 31402 Toulouse Cedex 4 (FR); Airbus Defence and Space GmbH, 82024 Taufkirchen (DE)
(72) Inventor: HUMMEL, Timon, 31402 TOULOUSE Cedex 4 (FR); COATENCIEC, Claude, 31402 TOULOUSE Cedex 4 (FR); GNATA, Xavier, 31402 TOULOUSE Cedex 4 (FR); LAMOUR, Tobias, 31402 TOULOUSE Cedex 4 (FR); KRAUSER, Jasper, 31402 TOULOUSE Cedex 4 (FR); WENIG, Mark, 31402 TOULOUSE Cedex 4 (FR)
(74) Representative: Plasseraud IP

(56) References cited:
- CN-B- 102 435 311
- US-A- 5 768 040
- US-A1- 2004 178 329
- WEI LIDONG ET AL: "Study of wide-field imaging spectrometer based on Fery prism with optical fiber array", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10785, 25 September 2018 (2018-09-25) , pages 107851P-107851P, XP060111798, DOI: 10.1117/12.2325595 ISBN: 978-1-5106-2099-5
- UTO KUNIAKI ET AL: "Development of a Low-Cost Hyperspectral Whiskbroom Imager Using an Optical Fiber Bundle, a Swing Mirror, and Compact Spectrometers", IEEE JOURNAL OF SELECTED TOPICS IN APPLIED EARTH OBSERVATIONS AND REMOTE SENSING, IEEE, USA, vol. 9, no. 9, 2 September 2016 (2016-09-02), pages 3909-3925, XP011624723, ISSN: 1939-1404, DOI: 10.1109/JSTARS.2016.2592987 [retrieved on 2016-10-03]

## Description

The invention relates to a spectral imager and a process using such spectral imager.

### -- BACKGROUND OF THE INVENTION --

Spectral imagers are well-known devices useful for analysing scene contents both spectrally and through imaging. In particular, they are used for space missions on-board satellites for analysing atmosphere compounds or Earth surface composition from space.

In a known manner, a spectral imager comprises a radiation collecting optics, a spectrometer and a two-dimensional photodetector. The radiation collecting optics forms an image of the scene in an intermediate focal plane, and a field mask with a slit-shaped aperture is located in this intermediate focal plane for selecting a thin strip within the scene image. The spectrometer re-images the selected scene strip on the photodetector, while producing a spectral spreading perpendicular to the direction of the image strip. In this way, the spectral imager combines an imaging operation with spectral analyses which relate respectively to separate pixels in the image strip. In some of the existing spectral imagers, the width of the slit-shaped aperture of the field mask is selected so that the slit is imaged by the spectrometer on a single row of photosensitive elements of the two-dimensional photodetector.

The radiation collecting optics may be a telescope for space applications, and the spectrometer may be based on a grating or prism. Commonly, the grating or prism is implemented with a collimated radiation beam, i.e. this grating or prism is inserted between a collimating optics and an output re-imaging optics.

In such spectral imagers, the instrument spectral response function, or ISRF, varies depending on variations that may exist in a radiation intensity distribution within the slit aperture of the field mask, both along the longitudinal and transverse directions of the slit. As a consequence, uncertainty exists when inferring spectral intensity values from the detection signals that are outputted by the photosensitive elements of the photodetector. For mitigating or suppressing such effect of non-uniform scenes on the instrument spectral response function, it is known implementing a two-dimensional slit homogenizer within the spectral imager. For example, document EP 3 605 045 discloses such implementation of a two-dimensional slit homogenizer.

However, other issues remain which make the design of such spectral imagers complex and/or deteriorate the expected instrument performances. In particular, the following ones are also important:
- the arrangement of the radiation collecting optics and the spectrometer with respect to each other is fixed by optical alignment requirements, and the resulting instrument structure is difficult to integrate within a satellite;
- it is difficult to control separate temperature values for the radiation collecting optics and the spectrometer, as such temperature values are best appropriate for each part of the spectral imager;
- qualification of the full instrument to withstand launch environment while keeping the radiation collecting optics and spectrometer aligned is complex.

Starting from this situation, an object of the present invention consists in providing a novel spectral imager which alleviates at least one of the preceding issues.

In particular, one object of the invention may consist in providing two-dimensional slit homogenization in a simple and reliable manner.

The article of Lidong Wei et al. entitled "Study of wide-field imaging spectrometer based on Fery prism with optical fiber array", Proceedings of SPIE, Vol. 10785, 2018, pp. 107851P-1 à 107851P-4, discloses an optical system which includes an optical fiber bundle.

Document US 2004/178329 A1 relates to an imaging instrument in which an optical fiber bundle is inserted between the focal plane where the image is formed by an imaging optics, and image detector arrays. A spectrometer may be included in the instrument so that the optical fiber bundle has the role of forming a spectrometer entrance slit.

Document US 5,768,040 A teaches that the entrance optical head of the fiber bundle may be shaped according to a curved entrance image that is produced by an imaging optics.

### -- SUMMARY OF THE INVENTION --

For meeting at least one of these objects or others, a first aspect of the present invention is defined by independent claim 1 and proposes a spectral imager suitable for providing an image of a scene within a detection plane along a slit-along direction, and for producing simultaneously a spectral spreading along a slit-across direction which is perpendicular to the slit-along direction in the detection plane, this spectral imager comprising:
- a radiation collecting optics, which is adapted for producing an intermediate image of the scene within an intermediate focal plane;
- a spectrometer, which is suitable for imaging a content of a slit track in the detection plane along the slit-along direction, and for producing simultaneously the spectral spreading along the slit-across direction with radiation that originates from the slit track; and
- a photodetector which comprises a two-dimensional array of photosensitive elements, and which is arranged in the detection plane so that rows of the photosensitive elements are parallel to the slit-along direction.

The invention spectral imager further comprises:
- an optical fibre bundle, which comprises a plurality of optical fibres extending each from an entrance optical head to an output optical head, the optical fibres having respective entrance ends aligned within the entrance optical head, and respective output ends aligned within the output optical head.

According to the invention, the optical fibre bundle is arranged so that the entrance optical head is located in the intermediate focal plane, and the output optical head forms the slit track. In this manner, the entrance optical head of the optical fibre bundle collects radiation from the intermediate image as formed by the radiation collecting optics. Possibly, the entrance optical head may also serve as a field mask, with the slit-shaped aperture formed by the alignment of the optical fibre entrance ends in the entrance optical head. Alternatively, the entrance optical head may be combined with a field mask which has a slit-shaped aperture that matches a common outline of all the entrance ends of the optical fibres in the entrance optical head. The slit track formed by the output ends of the optical fibres constitutes the entrance of the spectrometer.

According to the invention, a length of the optical fibres in the optical fibre bundle between the entrance optical head and the output optical head is comprised between 40 cm (centimetre) and 2 m (meter). Thanks to the minimum length value of 40 cm, a near-field homogenization is obtained which makes the radiation intensity distribution almost uniform across the output end of each optical fibre, whatever the actual radiation intensity distribution across the entrance end of the optical fibre as produced by the imaging operation of the radiation collecting optics.

According to the invention, the invention spectral imager further comprises:
- bundle shape control means, that are suitable for fixedly determining a shape of the optical fibres between the entrance optical head and the output optical head.

These bundle shape control means are adapted for maintaining curvatures of each one of the optical fibres within two planes that are angularly separated, with curvature radii comprised between 0.5 cm and 20 cm for each plane. Thanks to the maximum curvature radius of 20 cm, a far-field homogenization is obtained which makes the radiation intensity distribution almost uniform at a location within the spectrometer, whatever the actual radiation intensity distribution across the entrance end of each optical fibre. This allows using efficiently a transverse extension of a radiation-dispersing element that is implemented in the spectrometer. The minimum curvature radius ensures that the losses which affect the guided radiation propagation are maintained at a low level, and that each optical fibre does not break. Preferably, both planes in which the curvatures of the optical fibres are determined according to the invention may be perpendicular to each other.

The near-field and far-field homogenizations make the instrument spectral response function of the invention spectral imager independent or almost independent from intensity variations existing in the intermediate image of the scene.

According to the invention spectral imager, the bundle shape control means are adapted for maintaining each one of the optical fibres along a wavy path in each of the planes, with two or three turns in each plane, two successive turns in each plane being separated by a change in a curvature direction of the optical fibre.

Additional benefits of the invention spectral imager are:
- the arrangement of the spectrometer with respect to the radiation collecting optics can be adapted for meeting external requirements, in particular requirements due to integration of the spectral imager in a satellite;
- the optical alignment requirement of the spectrometer with respect to the radiation collecting optics is replaced by alignment requirements of the entrance optical head with respect to the radiation collecting optics and of the output optical head with respect to spectrometer, which are easier to meet;
- the optical fibre bundle insulates the radiation collecting optics and the spectrometer from each other with respect to vibration transmission; and
- the optical fibre bundle makes it easier to insulate thermally the radiation collecting optics and the spectrometer from each other.

In preferred embodiments of the invention, any of the following features may be reproduced, separately or in combination of several of them:
- the fibre length of each optical fibre between the entrance optical head and the output optical head may be comprised between 50 cm and 1.1 m;
- the curvature radius of each optical fibre may be comprised between 2 cm and 10 cm for each plane;
- the optical fibres may be gathered in the optical fibre bundle with a circular cross-sectional bundle shape at at least one location between the entrance optical head and the output optical head. Collective bending of the optical fibres through bending of the bundle by the bundle shape control means is thus easier;
- each optical fibre may have an individual core cross-section that is square or rectangular. The common outline of the optical fibres in the entrance optical head can thus match in an improved manner a slit shape. In addition, the individual core cross-sectional shape of each optical fibre, when square or rectangular, can match the radiation entrance window of each photosensitive element of the photodetector;
- the optical fibres may be aligned in the entrance optical head according to a rectilinear segment, and aligned in the output optical head according to a curved track for compensating for a field distortion of the spectrometer. In this way, an image of the rectilinear segment at the entrance optical head can be rectilinear in the detection plane;
- the optical fibre bundle may comprise more than 50 optical fibres, preferably between 63 and 257 optical fibres. The spectral imager can thus have a good spatial resolution;
- the spectral imager may further comprise temperature control means arranged so that, during an operation of the spectral imager, a temperature value of the entrance optical head of the optical fibre bundle is higher than 270 K (Kelvin), preferably below 320 K, and another temperature value of the output optical head of the optical fibre bundle is lower than 260 K, preferably higher than 200 K;
- the optical fibres may be fixedly supported by a first rigid element at the entrance optical head, and fixedly supported by a second rigid element at the output optical head, the first and second rigid elements being separated and distant from each other. Improved vibration-insulation can be achieved in this way;
- the optical fibres may be of multimode type for radiation that is processed and detected by the spectral imager;
- each optical fibre may be comprised of a core and a cladding, and surrounded with a coating which is external to the cladding in at least an intermediate length portion of the optical fibre bundle between the entrance optical head and the output optical head, and an inter-core distance value between neighbouring ones of the optical fibres within the entrance and output optical heads may be smaller than another inter-core distance value between neighbouring ones of the optical fibres as existing in the intermediate length portion of the optical fibre bundle. This may be achieved by partial or total removal of the coating at the entrance and output optical heads. Better spatial sampling can be obtained in this way; and
- the spectral imager may be of single-band type or multiple-band type.

A second aspect of the invention proposes a process for optically analysing a portion of the Earth, using a spectral imager that is in accordance with the first invention aspect. For such process, the spectral imager is located on-board a satellite.

For example, the spectral imager that is used for such process may have a spectral operation range suitable for analysing a CO₂-content that exists at a location on the Earth.

The invention process may be implemented with moving a line-of-sight of the spectral imager towards the Earth portion so that an image movement on the photodetector has a component parallel to the slit-across direction. In such implementations of push-broom type, a plurality of successive images is captured while the line-of-sight is moved.

These and other features of the invention will be now described with reference to the appended figures, which relate to preferred but not-limiting embodiments of the invention.

### -- BRIEF DESCRIPTION OF THE DRAWINGS --

Figure 1 is a general diagram of a spectral imager according to the invention;
Figure 2 shows optical fibre bending as implemented in accordance with the present invention; and
Figure 3 illustrates a possible optical fibre arrangement in an entrance optical head used in the spectral imager of Figure 1.

For clarity sake, element sizes which appear in these figures do not correspond to actual dimensions or dimension ratios. Also, some of the components used in the invention are represented using symbols. Furthermore, same reference numbers which are indicated in several figures denote identical elements of elements with identical function.

### -- DETAILED DESCRIPTION OF THE INVENTION --

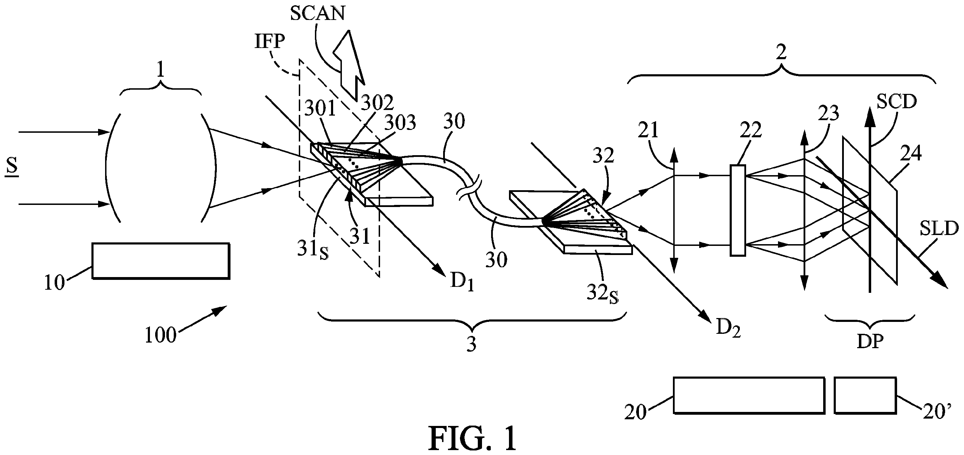

Reference number 100 in Figure 1 generally denotes a spectral imager that is in accordance with the present invention. A radiation collecting optics 1 forms an image of a scene S in an intermediate focal plane IFP. In particular, when the spectral imager 100 is intended to be used on-board a satellite for analysing a scene content existing at the surface of the Earth, the radiation collecting optics 1 may be a telescope, such as an anastigmatic three-mirror telescope for example. However, any other telescope type may also be used. The spectral imager 100 may be combined with a scanning device suitable for varying a line-of-sight of this spectral imager so that the scene image moves according to the arrow SCAN in the intermediate focal plane IFP. Any type of scanning device may be used, including a rotating entrance mirror or a scanning operation that is produced by the orbit and attitude control system of the satellite.

The spectral imager 100 also comprises a spectrometer 2 which may be of a common type appropriate for the spectral range desired. For example, the spectrometer 2 may comprise in series along a propagation direction of radiation in the spectral imager 100: a collimator 21, a radiation-dispersing element 22, a re-imager 23 and a photodetector 24. Although represented each as a single lens for clarity sake of the figure, the collimator 21 and the re-imager 23 may each be comprised of several optical components, such as mirrors. The radiation-dispersing element 22 may be a grating of any type, operating through transmission or reflection. Alternatively, it may be a prism. Advantageously, the collimator 21 is arranged so that the radiation which originates from the intermediate focal plane IFP is collimated at the radiation-dispersing element 22. The re-imager 23 produces a final image of the scene S in a detection plane DP. The photodetector 24 is of matrix type, comprised of an array of photosensitive elements distributed in row and columns in a usual manner. It is arranged so that the array of the photosensitive elements is superposed to the detection plane DP. Due to the radiation-dispersing element 22, a respective image of the scene S is formed in the detection plane DP for each wavelength value, all images being offset with respect to each other according to the spectral dispersing efficiency of the radiation-dispersing element 22. SCD indicates the direction of such spectral offset in the detection plane DP, as resulting from the orientation of the radiation-dispersing element 22.

According to the standard operation of a spectral imager, the scene S is imaged in the detection plane DP along a direction SLD that is perpendicular to the SCD direction. The rows and columns of the photodetector 24 are parallel and perpendicular to the directions SLD and SCD. Thus, the spectral spreading that is produced along a column parallel to the SCD direction relates to one and same scene point imaged as a pixel, and the scanning of the line-of-sight according to the arrow SCAN makes the image content to move parallel to the SCD direction in the detection plane DP. For such operation, it is necessary that the intermediate image of the scene S which is produced by the radiation collecting optics 1 in the intermediate focal plane IFP is filtered in a manner similar as that produced by a slit-apertured field mask. The slit-shaped aperture of such field mask is to be oriented with the transverse slit direction imaged parallel to the SCD direction by the spectrometer 2, and the longitudinal slit direction imaged parallel to the SLD direction. For this reason, the SCD direction is called slit-across direction and the SLD direction is called slit-along direction.

According to the invention, an optical fibre bundle 3 is inserted in the spectral imager 100, between the intermediate focal plane IFP and the optical entrance of the spectrometer 2. This optical fibre bundle 3 contains a plurality of independent optical fibres, for example 123 optical fibres, which are gathered in a single pack, preferably with a generally circular bundle cross-sectional area in a main length portion 30 of this bundle. All the optical fibres may have one and same length value in the bundle 3, and extend between an entrance optical head 31 of the bundle 3 and an output optical head 32 of the bundle 3. Whatever the transverse arrangement of the optical fibres in the main length portion 30 of the bundle 3, the optical fibres are re-arranged according to an alignment design in the entrance optical head 31 and in the output optical head 32. Preferably, a peripheral coating that may be provided around each optical fibre in the main length portion 30 of the bundle 3 may be removed at the entrance and output optical heads 31 and 32, so that ends of the optical fibres are adjacent or almost adjacent in these latter. In this way, entrance ends of the optical fibres at the entrance optical head 31 constitute all together an optical slit which is substantially equivalent to a slit-aperture of a field mask. The entrance optical head 31 is placed in the intermediate focal plane IFP.

Possibly, the optical fibres at the entrance optical head 31 may be combined with an actual field mask having a slit-aperture that sensibly matches a total area of the entrance ends of the optical fibres. In the figures, reference numbers 301, 302 and 303 refer to three of the optical fibres. The optical fibre entrance ends are aligned in the intermediate focal plane IFP along a direction D₁ which is preferably perpendicular to the moving direction SCAN that is effective for the intermediate image when the line-of-sight of the spectral imager 100 is moved with respect to the scene S.

The output ends of the optical fibres of the bundle 3 within the output optical head 32 may be aligned within the optical entrance of the spectrometer 2. An alignment direction at this stage in the spectral imager 100 is denoted D₂. It may be oriented so that an image of the alignment direction D₂ formed by the spectrometer 2 in the detection plane DP is perpendicular to the spectral dispersion direction which is produced by the radiation-dispersing element 22, i.e. parallel to the SLD direction. In this way, the output ends of the optical fibres form a slit track which serves as a spectrometer entrance slit. It is not necessary that the fibre output ends are arranged exactly as a rectilinear segment in the output optical head 32. Advantageously, the slit track formed by the alignment of the fibre output ends in the output optical head 32 may be curved, and designed so that the image of the slit track through the spectrometer 2, in the detection plane DP, is rectilinear. In this way, a field distortion of the spectrometer 2 can be compensated for by an appropriate shape of the slit track, i.e. an appropriate curved arrangement of the output ends of the optical fibres 301, 302, 303... in the output optical head 32. Except a spatial separation thus obtained between the intermediate focal plane IFP and the optical entrance of the spectrometer 2, the optical operation of the spectral imager is unchanged.

At the entrance and output optical heads 31 and 32, the ends of the optical fibres 301, 302, 303... may be maintained in suitable alignments using appropriate fibre end supports, denoted with reference signs 31s and 32s respectively. Each support 31s, 32s may be a small rigid plate, possibly provided with a curvature for the output optical head 32.

The spatial separation produced by the optical fibre bundle 3 between the radiation collecting optics 1 and the spectrometer 2 allows the spectrometer 2 to be decoupled mechanically and/or thermally from the radiation collecting optics 1. For the structural aspects driven by the launch environment constraints they can be considered as separated entities, which separation facilitates the design and testing. The alignment requirements between the two units are easier to meet.. Also, because the bundle 3 has a small cross-sectional area, and because its thermal conduction is low, it is compatible with providing a thermal insulation between the optics 1 and the spectrometer 2. Thus, the optics 1 may be controlled for having a temperature value of about 293 K, and the spectrometer 2 may be controlled for having another temperature value of about 230 K. Reference number 10 denotes first temperature control means that may be dedicated to the radiation collecting optics 1, and reference signs 20 and 20' denote other temperature control means that may be dedicated respectively to the spectrometer 2 and the photodetector 24.

According to the invention, the length of each optical fibre in the bundle 3 is greater than 40 cm, for example equal to about 1 m. Thanks to this minimum length value, the distribution of the radiation intensity across each optical fibre at its output end is almost uniform, whatever any variation that may exist in the radiation intensity across the same optical fibre at its entrance end in the intermediate focal plane IFP. This first effect of the optical fibre bundle 3 may be called near-field homogenization.

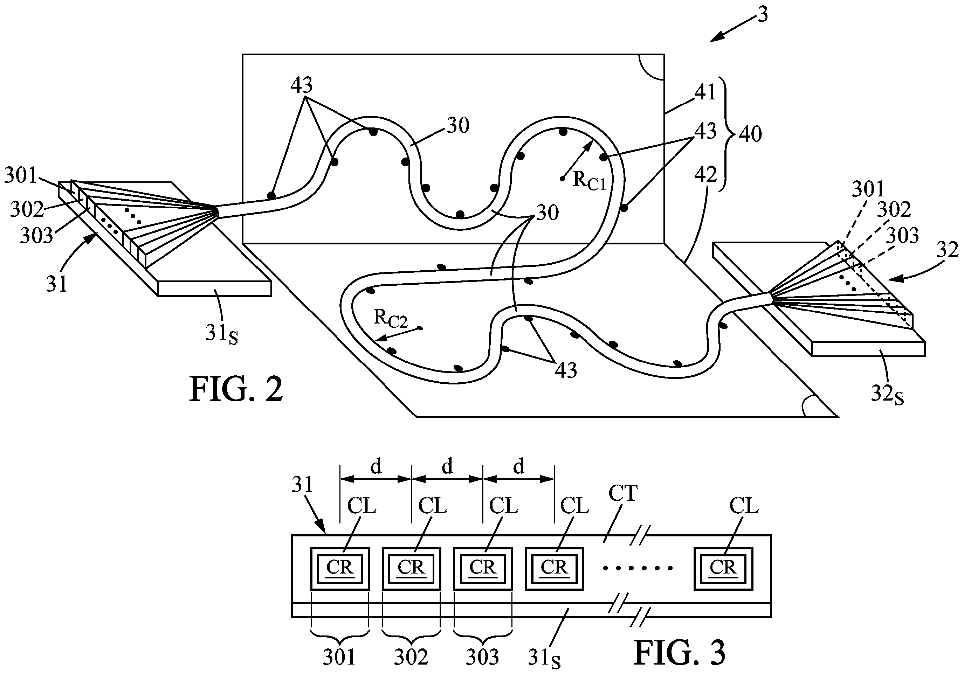

According to an additional invention feature, the optical fibre bundle 3 is bent within two planes between its entrance optical head 31 and output optical head 32. These planes have the reference numbers 41 and 42 in Figure 2. Preferably, the planes 41 and 42 are perpendicular to each other. They may be formed by two walls which are equipped with cleats 43 suitable for maintaining the bundle 3 along a curved path on the wall 41 and then on the wall 42. The Man skilled in the art will understand that the exact path shape does not matter really, provided that sufficient curvatures are produced in each plane. For example, the path shape for the bundle 3 may be wavy with three alternated turns on each one of the walls 41 and 42. As an alternative to a wavy path shape parallel to each plane, the bundle 3 can be maintained for forming one or several first loops parallel to the wall 41, and then one or several second loops parallel to the wall 42. Opposite loop orientations may also be combined on each wall. R_{C1} and R_{C2} denote the respective curvature radii parallel to the walls 41 and 42. For example, R_{C1} and R_{C2} may be each equal to about 5 cm. Such two-dimensional bending of the bundle 3 ensures that the intensity distribution of the radiation that is propagated through any one of the optical fibres, when observed substantially at the radiation-dispersing element 22, is almost uniform whatever any variation that may exist in the radiation intensity across the same optical fibre at its entrance end in the intermediate focal plane IFP. This second effect of the optical fibre bundle 3 when implemented according to the invention may be called far-field homogenization. The walls 41 and 42 and the cleats 43 correspond to the bundle shape control means as mentioned in the general part of this description. The bundle shape control means are generally denoted by the reference number 40. The optical fibres 301, 302, 303... may preferably be arranged according to a circular packing in the main length portion 30 of the bundle 3 between the entrance and output optical heads 31 and 32, for making it easier to bend the bundle 3 at the cleats 43. Such bundle shape control means 40 produce efficient far-field homogenization, so that the instrument spectral response function of the spectral imager 100 is not affected by radiation intensity variations that may exist across the entrance end of each optical fibre. Put another way, the instrument spectral response function of the spectral imager 100 is not affected by sharp image content variations possibly existing in the intermediate focal plane IFP.

Figure 3 shows the entrance ends of the optical fibres 301, 302, 303... at the entrance optical head 31 for a preferred embodiment of the invention. Each optical fibre 301, 302, 302... may have a rectangular core CR, which is surrounded by a cladding CL. Possible dimensions may be about 100 µm (micrometre) x 300 µm for the core cross-section, and 40 µm for the cladding thickness. Such cross-sectional dimensions correspond to optical fibres of multimode type. The distance d between central axes of neighbouring optical fibres in the entrance optical head 31 may be about 420 µm, for allowing a good spatial resolution value for the spectral imager 100 in the detection plane DP. Possibly, such rectangular cross-sectional shape of the optical fibres may be combined with a binning implementation of the photosensitive elements of the photodetector 24. For obtaining such value for the inter-fibre distance at the entrance optical head 31, and also at the output optical head 32, a potting and/or an external coating of the optical fibres that exists in the main length portion 30 of the bundle 3 between the heads 31 and 32 may have been removed at these heads partially or totally. Reference sign CT denotes a coating restored in the entrance optical head 31 for maintaining fixedly the optical fibres 301, 302, 303... on the rigid supporting plate 31s.

Such spectral imager may be useful for many applications, including space applications, for example for missions dedicated to imaging and spectral analysis of a composition existing at the surface of the Earth. For such missions, the spectral imager 100 may be situated on-board a satellite in orbit around the Earth. Such missions may concern the atmospheric composition as well as landscape composition at the Earth surface.

## Claims

1. A spectral imager (100) suitable for providing an image of a scene (S) within a detection plane (DP) along a slit-along direction (SLD), and for producing simultaneously a spectral spreading along a slit-across (SCD) direction which is perpendicular to the slit-along direction in the detection plane, said spectral imager comprising:
- a radiation collecting optics (1), adapted for producing an intermediate image of the scene (S) within an intermediate focal plane (IFP);
- a spectrometer (2), suitable for imaging a content of a slit track in the detection plane (DP) along the slit-along direction (SLD), and for producing the spectral spreading along the slit-across direction (SCD) with radiation that originates from the slit track;
- a photodetector (24) which comprises a two-dimensional array of photosensitive elements, and which is arranged in the detection plane (DP) so that rows of the photosensitive elements are parallel to the slit-along direction (SLD); and
- an optical fibre bundle (3), which comprises a plurality of optical fibres (301, 302, 303...) extending each from an entrance optical head (31) to an output optical head (32), the optical fibres having respective entrance ends aligned within the entrance optical head, and respective output ends aligned within the output optical head,
the optical fibre bundle (3) being arranged so that the entrance optical head (31) is located in the intermediate focal plane (IFP), and the output optical head (32) forms the slit track, and
a length of the optical fibres (301, 302, 303...) in the optical fibre bundle (3) between the entrance optical head (31) and the output optical head (32) being comprised between 40 cm and 2 m,
the spectral imager (100) further comprising:
- bundle shape control means (40), that are suitable for fixedly determining a shape of the optical fibres (301, 302, 303...) between the entrance optical head (31) and the optical output head (32),
the bundle shape control means (40) being adapted for maintaining curvatures of each one of the optical fibres (301, 302, 303...) within two planes (41, 42) that are angularly separated, with curvature radii comprised between 0.5 cm and 20 cm for each plane,
the spectral imager (100) being **characterized in that** the bundle shape control means (40) are adapted for maintaining each one of the optical fibres (301, 302, 303...) along a wavy path in each of the planes (41, 42), with two or three turns in each plane, two successive turns in each plane being separated by a change in a curvature direction of said optical fibre.

2. The spectral imager (100) according to claim 1, wherein the optical fibres (301, 302, 303...) are gathered in the optical fibre bundle (3) with a circular cross-sectional bundle shape at at least one location between the entrance optical head (31) and the output optical head (32).

3. The spectral imager (100) according to any one of the preceding claims, wherein each optical fibre (301, 302, 303...) has an individual core cross-section that is square or rectangular.

4. The spectral imager (100) according to any one of the preceding claims, wherein the optical fibres (301, 302, 303...) are aligned in the entrance optical head (31) according to a rectilinear segment, and are aligned in the output optical head (32) according to a curved track for compensating for a field distortion of the spectrometer (2), so that an image of the rectilinear segment at the entrance optical head is rectilinear in the detection plane (DP).

5. The spectral imager (100) according to any one of the preceding claims, wherein the optical fibre bundle (3) comprises more than 50 optical fibres (301, 302, 303...), preferably between 63 and 257 optical fibres.

6. The spectral imager (100) according to any one of the preceding claims, further comprising temperature control means (10, 20, 20') arranged so that, during an operation of the spectral imager, a temperature value of the entrance optical head (31) of the optical fibre bundle (3) is higher than 270 K, and another temperature value of the output optical head (32) of said optical fibre bundle is lower than 260 K.

7. The spectral imager (100) according to any one of the preceding claims, wherein the optical fibres (301, 302, 303...) are fixedly supported by a first rigid element (31s) at the entrance optical head (31), and fixedly supported by a second rigid element (32s) at the output optical head (32), said first and second rigid elements being separated and distant from each other.

8. The spectral imager (100) according to any one of the preceding claims, wherein the optical fibres (301, 302, 303...) are of multimode type for radiation that is processed and detected by said spectral imager.

9. The spectral imager (100) according to any one of the preceding claims, wherein each optical fibre (301, 302, 303...) is comprised of a core (CR) and a cladding (CL), and is surrounded with a coating which is external to the cladding in at least an intermediate length portion (30) of the optical fibre bundle (3) between the entrance optical head (31) and the output optical head (32), and an inter-core distance value between neighbouring ones of the optical fibres within the entrance and output optical heads is smaller than another inter-core distance value between neighbouring ones of the optical fibres as existing in the intermediate length portion of the optical fibre bundle.

10. A process for optically analysing a portion of the Earth, using a spectral imager (100) that is in accordance with any one of the preceding claims, said spectral imager being on-board a satellite.

11. The process according to claim 10, wherein a spectral operation range of the spectral imager (100) is suitable for analysing a CO₂-content existing at a location on the Earth.

12. The process according to claim 10 or 11, implemented with moving a line-of-sight of the spectral imager (100) towards the Earth portion so that an image movement on the photodetector (24) has a component parallel to the slit-across direction (SCD), and a plurality of images is captured while the line-of-sight is moved.

## Patentansprüche

1. Spektrales Bildaufnahmegerät (100), das geeignet ist zum Bereitstellen eines Bilds einer Szene (S) in einer Detektionsebene (DP) entlang einer Spalt-Längsrichtung (SLD) und zum gleichzeitigen Erzeugen einer spektralen Spreizung entlang einer Spalt-Querrichtung (SCD), die senkrecht zur Spalt-Längsrichtung ist, in der Detektionsebene, wobei das spektrale Bildaufnahmegerät aufweist:
- eine Strahlungssammlungsoptik (1), die zum Erzeugen eines Zwischenbilds der Szene (S) in einer Zwischenfokusebene (IFP) angepasst ist;
- ein geeignetes Spektrometer (S) zum Abbilden eines Inhalts einer Spaltspur in der Detektionsebene (DP) entlang der Spalt-Längsrichtung (SLD) und zum Erzeugen der spektralen Spreizung entlang der Spalt-Querrichtung (SCD) mit Strahlung, die aus der Spaltspur stammt;
- einen Fotodetektor (24), der eine zweidimensionale Matrix von fotosensitiven Elementen aufweist und der derart in der Detektionsebene (DP) angeordnet ist, dass Reihen der fotosensitiven Elemente parallel zu der Spalt-Längsrichtung (SLD) sind; und
- ein optisches Faserbündel (3), das mehrere optische Fasern (301, 302, 303 ...) aufweist, die sich jeweils von einem optischen Eingangskopf (31) zu einem optischen Ausgangskopf (32) erstrecken, wobei die optischen Fasern jeweilige Eingangsenden haben, die in dem optischen Eingangskopf ausgerichtet sind, und jeweilige Ausgangsenden haben, die in dem optischen Ausgangskopf ausgerichtet sind,
wobei das optische Faserbündel (3) derart angeordnet ist, dass sich der optische Eingangskopf (31) in der Zwischenfokusebene (IFP) befindet und der optische Ausgangskopf (32) die Spaltspur bildet, und
eine Länge der optischen Fasern (301, 302, 303 ...) in dem optischen Faserbündel (3) zwischen dem optischen Eingangskopf (31) und dem optischen Ausgangskopf (32) zwischen 40cm und 2m ist,
wobei das spektrale Bildaufnahmegerät (100) ferner aufweist:
- Bündelform-Steuereinrichtungen (40), die geeignet sind, um eine Form der optischen Fasern (301, 302, 303 ...) zwischen dem optischen Eingangskopf (31) und dem optischen Ausgangskopf (32) festzulegen,
wobei die Bündelform-Steuereinrichtungen (40) angepasst sind, um Krümmungen jeder der optischen Fasern (301, 302, 303 ...) innerhalb zweier, in einem Winkel zueinander stehender Ebenen (41, 42) aufrechtzuerhalten, mit einem Krümmungsradius zwischen 0,5cm und 20cm für jede Ebene,
wobei das spektrale Bildaufnahmegerät (100) **dadurch gekennzeichnet ist, dass** die Bündelform-Steuereinrichtungen (40) angepasst sind, um jede der optischen Fasern (301, 302, 303 ...) entlang eines welligen Pfads in jeder der Ebenen (41, 42) zu halten, mit zwei oder drei Biegungen in jeder Ebene, wobei zwei aufeinanderfolgende Biegungen in jeder Ebene durch eine Änderung einer Krümmungsrichtung der betreffenden optischen Faser getrennt sind.

2. Spektrales Bildaufnahmegerät (100) nach Anspruch 1, wobei die optischen Fasern (301, 302, 303 ...) in dem optischen Faserbündel (3) gesammelt sind, wobei an mindestens einem Ort zwischen dem optischen Eingangskopf (31) und dem optischen Ausgangskopf (32) die Bündelform einen kreisförmigen Querschnitt hat.

3. Spektrales Bildaufnahmegerät (100) nach einem der vorstehenden Ansprüche, wobei jede optische Faser (301, 302, 303 ...) einen individuellen Kernquerschnitt hat, der quadratisch oder rechtwinklig ist.

4. Spektrales Bildaufnahmegerät (100) nach einem der vorstehenden Ansprüche, wobei die optischen Fasern (301, 302, 303 ...) in dem optischen Eingangskopf (31) gemäß einem geradlinigen Segment ausgerichtet sind und in dem optischen Ausgangskopf (32) gemäß einer gekrümmten Spur ausgerichtet sind, um eine Feldverzerrung des Spektrometers (2) zu kompensieren, so dass ein Bild des geradlinigen Segments an dem optischen Eingangskopf geradlinig in der Detektionsebene (DP) ist.

5. Spektrales Bildaufnahmegerät (100) nach einem der vorstehenden Ansprüche, wobei das optische Faserbündel (3) mehr als 50 optische Fasern (301, 302, 303 ...), vorzugsweise zwischen 63 und 257 optische Fasern aufweist.

6. Spektrales Bildaufnahmegerät (100) nach einem der vorstehenden Ansprüche, ferner aufweisend Temperatursteuereinrichtungen (10, 20, 20'), die derart konfiguriert sind, dass während eines Betriebs des spektralen Bildaufnahmegeräts ein Temperaturwert des optischen Eingangskopfs (31) des optischen Faserbündels (3) höher als 270K ist und ein anderer Temperaturwert des optischen Ausgangskopfs (32) des optischen Faserbündels niedriger als 260K ist.

7. Spektrales Bildaufnahmegerät (100) nach einem der vorstehenden Ansprüche, wobei die optischen Fasern (301, 302, 303 ...) an dem optischen Eingangskopf (31) fest auf einem ersten starren Element (31s) gelagert sind und an dem optischen Ausgangskopf (32) fest auf einem zweiten starren Element (32s) gelagert sind, wobei das erste und zweite starre Element separat und voneinander beabstandet sind.

8. Spektrales Bildaufnahmegerät (100) nach einem der vorstehenden Ansprüche, wobei die optischen Fasern (301, 302, 303 ...) für Strahlung, die von dem spektralen Bildaufnahmegerät verarbeitet und detektiert wird, von einem Multimode-Typ sind.

9. Spektrales Bildaufnahmegerät (100) nach einem der vorstehenden Ansprüche, wobei jede optische Faser (301, 302, 303 ...) aus einem Kern (CR) und einem Mantel (CL) besteht und zumindest in einem Zwischenlängenabschnitt (30) des optischen Faserbündels (3) zwischen dem optischen Eingangskopf (31) und dem optischen Ausgangskopf (32) von einer Deckschicht, die außerhalb des Mantels ist, umgeben ist, und wobei ein Kern-Kern-Abstandswert zwischen benachbarten der optischen Fasern in dem optischen Eingangs- und dem optischen Ausgangskopf kleiner ist als ein anderer Kern-Kern-Abstandswert zwischen benachbarten der optischen Fasern, wie er in dem Zwischenlängenabschnitt des optischen Faserbündels vorkommt.

10. Verfahren zur optischen Analyse eines Gebiets der Erde unter Verwendung eines spektralen Bildaufnahmegeräts (100) nach einem der vorstehenden Ansprüche, wobei das spektrale Bildaufnahmegerät an Bord eines Satelliten ist.

11. Verfahren nach Anspruch 10, wobei ein spektraler Arbeitsbereich des spektralen Bildaufnahmegeräts (100) geeignet ist, um einen an einem Ort auf der Erde vorkommenden CO₂-Gehalt zu analysieren.

12. Verfahren nach Anspruch 10 oder 11, durchgeführt mit einem Bewegen einer hin zu dem Gebiet der Erde gerichteten Sichtlinie des spektralen Bildaufnahmegeräts (100), so dass eine Bildbewegung an dem Fotodetektor (24) eine Komponente parallel zur Spalt-Querrichtung (SCD) hat, und wobei mehrere Bilder erfasst werden, während die Sichtlinie bewegt wird.

## Revendications

1. Imageur spectral (100) approprié pour fournir une image d'une scène (S) dans un plan de détection (DP) le long d'une direction longitudinale de fente (SLD), et pour produire simultanément un étalement spectral le long d'une direction transversale de fente (SCD) qui est perpendiculaire à la direction longitudinale de fente dans le plan de détection, ledit imageur spectral comprenant :
- une optique de collecte de rayonnement (1), adaptée pour produire une image intermédiaire de la scène (S) dans un plan focal intermédiaire (IFP) ;
- un spectromètre (2), approprié pour imager un contenu d'une piste de fente dans le plan de détection (DP), le long de la direction longitudinale de fente (SLD), et pour produire l'étalement spectral le long de la direction transversale de fente (SCD) avec du rayonnement qui provient de la piste de fente ;
- un photodétecteur (24) qui comprend un réseau bidimensionnel d'éléments photosensibles, et qui est agencé dans le plan de détection (DP) de sorte que des rangées des éléments photosensibles sont parallèles à la direction longitudinale de fente (SLD) ; et
- un faisceau de fibres optiques (3), qui comprend une pluralité de fibres optiques (301, 302, 303...) s'étendant chacune à partir d'une tête optique d'entrée (31) jusqu'à une tête optique de sortie (32), les fibres optiques ayant des extrémités d'entrée respectives alignées à l'intérieur de la tête optique d'entrée, et des extrémités de sortie respectives alignées à l'intérieur de la tête optique de sortie,
le faisceau de fibres optiques (3) étant agencé de sorte que la tête optique d'entrée (31) est située dans le plan focal intermédiaire (IFP), et la tête optique de sortie (32) forme la piste de fente, et
une longueur des fibres optiques (301, 302, 303...) dans le faisceau de fibres optiques (3) entre la tête optique d'entrée (31) et la tête optique de sortie (32) étant comprise entre 40 cm et 2 m,
l'imageur spectral (100) comprenant en outre :
- des moyens de contrôle de forme de faisceau (40), qui sont appropriés pour déterminer de manière fixe une forme des fibres optiques (301, 302, 303...) entre la tête optique d'entrée (31) et la tête optique de sortie (32),
les moyens de contrôle de forme de faisceau (40) étant adaptés pour maintenir des courbures de chacune des fibres optiques (301, 302, 303...) à l'intérieur de deux plans (41, 42) qui sont angulairement séparés, avec des rayons de courbure compris entre 0,5 cm et 20 cm pour chaque plan,
l'imageur spectral (100) étant **caractérisé en ce que** les moyens de contrôle de forme de faisceau (40) sont adaptés pour maintenir chacune des fibres optiques (301, 302, 303...) le long d'un trajet ondulé dans chacun des plans (41, 42), avec deux ou trois virages dans chaque plan, deux virages successifs dans chaque plan étant séparés par un changement de direction de courbure de ladite fibre optique.

2. Imageur spectral (100) selon la revendication 1, dans lequel les fibres optiques (301, 302, 303...) sont rassemblées dans le faisceau de fibres optiques (3) avec une forme circulaire de faisceau en coupe transversale à au moins un endroit entre la tête optique d'entrée (31) et la tête optique de sortie (32).

3. Imageur spectral (100) selon l'une quelconque des revendications précédentes, dans lequel chaque fibre optique (301, 302, 303...) présente une section transversale de coeur individuelle qui est carrée ou rectangulaire.

4. Imageur spectral (100) selon l'une quelconque des revendications précédentes, dans lequel les fibres optiques (301, 302, 303...) sont alignées dans la tête optique d'entrée (31) selon un segment rectiligne, et sont alignées dans la tête optique de sortie (32) selon une piste courbe pour compenser une distorsion de champ du spectromètre (2), de sorte qu'une image du segment rectiligne au niveau de la tête optique d'entrée est rectiligne dans le plan de détection (DP).

5. Imageur spectral (100) selon l'une quelconque des revendications précédentes, dans lequel le faisceau de fibres optiques (3) comprend plus de 50 fibres optiques (301, 302, 303...), de préférence entre 63 et 257 fibres optiques.

6. Imageur spectral (100) selon l'une quelconque des revendications précédentes, comprenant en outre des moyens de contrôle de température (10, 20, 20') agencés de sorte que, lors d'un fonctionnement de l'imageur spectral, une valeur de température de la tête optique d'entrée (31) du faisceau de fibres optiques (3) est supérieure à 270 K, et une autre valeur de température de la tête optique de sortie (32) dudit faisceau de fibres optiques est inférieure à 260 K.

7. Imageur spectral (100) selon l'une quelconque des revendications précédentes, dans lequel les fibres optiques (301, 302, 303...) sont supportées de manière fixe par un premier élément rigide (31s) au niveau de la tête optique d'entrée (31), et sont supportées de manière fixe par un second élément rigide (32s) au niveau de la tête optique de sortie (32), lesdits premier et second éléments rigides étant séparés et éloignés l'un de l'autre.

8. Imageur spectral (100) selon l'une quelconque des revendications précédentes, dans lequel les fibres optiques (301, 302, 303...) sont de type multimode pour un rayonnement qui est traité et détecté par ledit imageur spectral.

9. Imageur spectral (100) selon l'une quelconque des revendications précédentes, dans lequel chaque fibre optique (301, 302, 303...) est composée d'un coeur (CR) et d'une gaine (CL), et est entourée d'un revêtement qui est externe à la gaine dans au moins une partie de longueur intermédiaire (30) du faisceau de fibres optiques (3) entre la tête optique d'entrée (31) et la tête optique de sortie (32), et une valeur de distance inter-coeur entre celles des fibres optiques qui sont voisines à l'intérieur des têtes optiques d'entrée et de sortie est plus petite qu'une autre valeur de distance inter-coeur entre celles des fibres optiques qui sont voisines dans la partie de longueur intermédiaire du faisceau de fibres optiques.

10. Procédé d'analyse optique d'une partie de la Terre, utilisant un imageur spectral (100) qui est selon l'une quelconque des revendications précédentes, ledit imageur spectral étant embarqué dans un satellite.

11. Procédé selon la revendication 10, dans lequel un intervalle de spectral fonctionnement de l'imageur spectral (100) est approprié pour analyser une teneur en CO₂ existant à un endroit sur la Terre.

12. Procédé selon la revendication 10 ou 11, mis en oeuvre en déplaçant une ligne de visée de l'imageur spectral (100) vers la partie de la Terre de sorte qu'un mouvement d'image sur le photodétecteur (24) présente une composante parallèle à la direction transversale de fente (SCD), et une pluralité d'images sont saisies lors du déplacement de la ligne de visée.
